# EUROPEAN PATENT SPECIFICATION

(11) **EP 3 147 620 B1**
(45) Date of publication and mention of the grant of the patent: **22.04.2020**
(21) Application number: 15186939.3
(22) Date of filing: 25.09.2015
(51) Int. Cl.: F28F 1/16, B60H 1/22, F28D 1/02, B60H 1/00

(54) **HEATING SYSTEM FOR VEHICLES, VEHICLE COMPRISING A HEATING SYSTEM**
HEIZSYSTEM FÜR FAHRZEUGE, FAHRZEUG MIT EINEM HEIZSYSTEM
SYSTÈME DE CHAUFFAGE POUR VÉHICULE, VÉHICULE COMPRENANT UN TEL SYSTÈME

(43) Date of publication of application: 29.03.2017
(73) Proprietor: Vehtec AB, 431 53 Mölndal (SE)
(72) Inventor: Nilsson, Johan, SE-471 74 Hjältby (SE)
(74) Representative: Zacco Sweden AB

(56) References cited:
- WO-A1-2011/033138
- FR-A1- 2 824 386
- US-A- 4 216 823
- US-A1- 2007 235 438

## Description

### TECHNICAL FIELD

Embodiments herein relate to a heating system for vehicles according to the preamble of claim 1. FR 2 824 386 discloses such a heating system. Embodiments herein further relate to a vehicle comprising a heating system for heating a vehicle passenger compartment.

### BACKGROUND

Commercial vehicles, such as buses and trains, normally comprise one or more passenger compartments. From time to time temperature and/or interior climate within such passenger compartments need to be adjusted. For example, the temperature within a vehicle passenger compartment may need to be increased during at least a part of a day or during colder seasons.

In order to control the temperature within their passenger compartments, commercial vehicles are often arranged with one or more heating systems which supplies heat from their respective vehicle engines or motors to heating elements within the respective passenger compartments. Such an engine or motor may e.g. be an internal combustion engine, a hybrid engine and/or an electric motor. The warm heating element or elements then exchange heat with colder air within the driver or passenger compartments whereby the driver or passenger compartments are heated.

An example of such a heating system is disclosed in EP0860672A2. The system described in EP0860672A2 may be useful in some applications, but there remains a need for a flexible heating system which can be used to adjust a climate within a vehicle passenger compartment and which efficiently can be controlled in accordance with a user's preferences. Thus, improvements in the field of vehicle heating systems are still desirable.

### SUMMARY

Embodiments herein aim to provide a heating system for vehicles, which can increase comfort within a vehicle passenger compartment and which efficiently can be controlled in accordance with a user's preferences. A heating system for vehicles according to the invention comprises the features of claim 1.

Since the heating system comprises an electrical heating arrangement interposed between the first radiator wall and the convector wall both the radiator and the convector can be heated efficiently when the electrical heating arrangement is activated.

The electrical heating arrangement can thus be used for heating both the radiator and the convector also during periods when no heated fluid is circulated in the fluid channels. Hereby the heating system will be capable of heating e.g. a vehicle passenger compartment also when a vehicle is shut off and parked. For example, the electrical heating arrangement can be used to warm up a bus motor-, driver- and/or passenger compartment before the bus is supposed to be used. If the bus should be used at 6 a.m. the electrical heating arrangement can be activated at 4-5 a.m. such that the passenger compartment thereof is warmer when passengers are supposed to enter the bus.

Both the radiator and convector can hereby be used for efficiently distributing heat from the electrical heating arrangement, independently of weather the heated fluid is circulated in the fluid channels or not. Further, since the electrical heating arrangement is interposed between the first radiator wall and the convector wall it is well protected from wear and tear.

According to some embodiments the resistive film covers at least 80% of at least one of the first radiator wall and the convector wall. A resistive film which covers at least 80% of at least one of the first radiator wall and the convector wall can heat up both the radiator and the convector relatively quickly and efficiently.

According to the invention the electrical heating arrangement comprises one or more protective membranes arranged between the resistive film and the first radiator wall and/or between the resistive film and the convector wall. One or more protective membranes have proven to efficiently protect the heating arrangement from wear, e.g. such as caused by vibrations during driving.

According to some embodiments the elongated radiator is attached to the elongated convector such that the first radiator wall faces the convector wall. Hereby both the first radiator wall and the convector wall can be heated by the electrical heating arrangement which is interposed between them.

According to some embodiments the elongated radiator and the elongated convector are formed from an extruded metal or metal alloy. This provides for a strong and robust heating system.

According to some embodiments the first radiator wall, the second radiator wall and the at least one fluid channel are integrally formed from an extruded metal or metal alloy. Hereby strength is further increased and the heating system can be manufactured economically.

According to some embodiments the heating system further comprises at least one bracket, said at least one bracket comprising
- first attachment means for attaching the bracket to a wall, and
- second attachment means for attaching at least one of the elongated radiator and the elongated convector.

Hereby the heating system can be mounted to e.g. a passenger compartment side wall in a reliable manner.

According to some embodiments the heating system comprises a pump and at least one conduit which is connected to the at least one fluid channel and to at least one of a cooling system of a vehicle internal combustion engine and an external fluid heater, said pump being controllable to circulate a fluid within the at least one conduit and the at least one fluid channel. Hereby a vehicle passenger compartment can be heated in an efficient manner. The heating fluid and the electrical heating arrangement can be used simultaneously for heating e.g. a vehicle interior and/or an engine or motor compartment. Hereby very rapid heating is achieved and a temperature within the passenger compartment can be controlled efficiently.

According to some embodiments the heating system comprises electrical leads, arranged to selectively supply the electrical heating arrangement from an electrical power source, the electrical power source being at least one of; an electrical grid, a battery, a generator and an alternator. Since such an electrical heating arrangement selectively can be supplied from one or more of an electrical grid, a battery, a generator and an alternator, the electrical heating arrangement can be heated in a very flexible, efficient and/or environmentally friendly manner.

According to some embodiments the heating system comprises control means for controlling at least one of an electrical effect and an electrical voltage supplied to the electrical heating arrangement. Hereby an output effect from the electrical heating arrangement can be easily and efficiently controlled.

Embodiments herein also aim to provide a vehicle which comprises one or more heating systems within a passenger compartment of the vehicle.

According to some embodiments, this is provided by a vehicle which comprises a passenger compartment which, in turn, comprises one or more vehicle heating systems according to embodiments disclosed herein.

### BRIEF DESCRIPTION OF THE DRAWINGS

The various aspects of embodiments herein, including its particular features and advantages, will be readily understood from the following detailed description and the accompanying drawings, in which:
Fig. 1 illustrates a heating system according to some embodiments in an exploded perspective-view,
Fig. 2 illustrates the Fig. 1 heating system from a side view,
Fig. 3 illustrates vehicle which comprises a heating system according to embodiments described herein, and
Fig. 4 illustrates a method for heating a vehicle passenger compartment.

### DETAILED DESCRIPTION

Embodiments herein will now be described more fully with reference to the accompanying drawings, in which some embodiments are shown. Like numbers refer to like elements throughout. Well-known functions or constructions will not necessarily be described in detail for brevity and/or clarity.

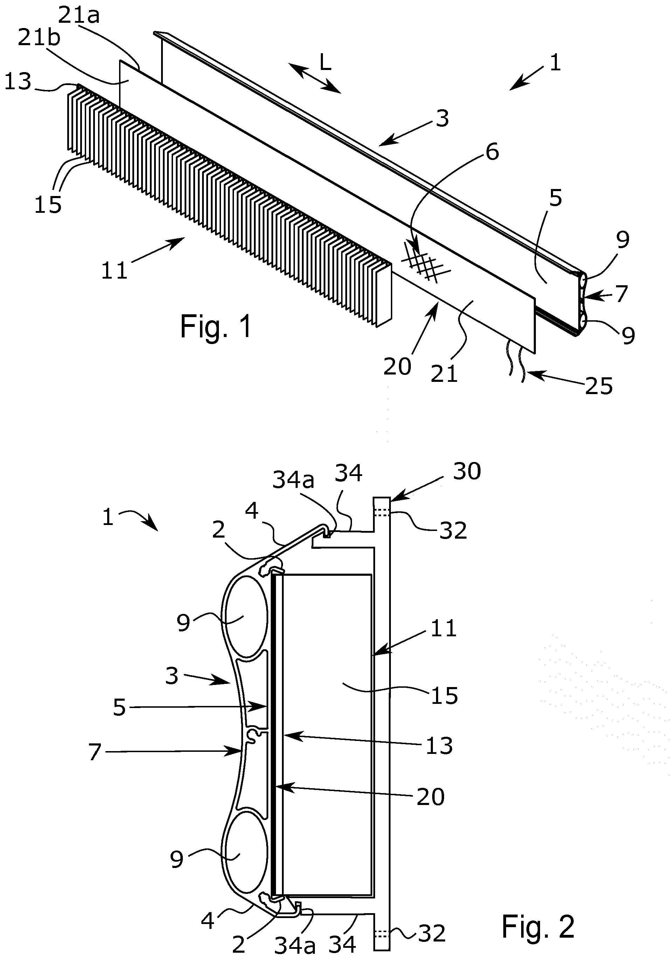

Fig. 1 illustrates a heating system 1 for vehicles. The heating system 1 can therefore also be referred to as a vehicle heating system.

The heating system 1 comprises an elongated radiator **3.** The radiator 3 comprises a first radiator wall **5** and a second radiator wall **7.** The radiator 3 further comprises at least one fluid channel **9** for receiving a heated fluid. The at least one fluid channel 9 is interposed between the first radiator wall 5 and the second radiator wall 7. In the embodiment depicted in Fig. 1 the radiator 3 comprises two fluid channels 9, arranged substantially in parallel with each other. The heating system 1 is elongated in the longitudinal direction **L,** as illustrated in Fig. 1.

The heating system 1 also comprises an elongated convector **11.** The convector 11 comprises a convector wall **13** and a plurality of convector flanges **15** which protrude outwardly from the convector wall 13. The convector flanges 15 can for example protrude outwardly substantially perpendicular relatively the convector wall 13.

In the embodiment illustrated in Fig. 1 the convector flanges 15 are arranged as a plurality of flat rectangular plates which are arranged in parallel to each other. In other embodiments the convector flanges can be e.g. corrugated, comprise a number of protrusions and/or apertures and/or being chamfered.

The heating system 1 further comprises an electrical heating arrangement **20.** The electrical heating arrangement 20 is arranged between the first radiator wall 5 and the convector wall 13. The electrical heating arrangement 20 can e.g. be attached by glue or by being squeezed in place. In some embodiments the electrical heating arrangement can be attached to, or formed integrally with, the first radiator wall 5 or the convector wall 13. Hereby assembling of the heating system 1 can be facilitated.

In the embodiment illustrated in Fig. 1 the electrical heating arrangement 20 extends along substantially the entire length of the heating system 1 or heating system module. In some other embodiments only some parts or sections of an interface between the convector wall 13 and the first radiator wall 5 is covered with the electrical heating arrangement 20.

According to some embodiments the electrical heating arrangement 20 is arranged as a resistive film **21** with a first film side **21a** and a second film side **21b.** As illustrated in Fig 1, the first film side 21a faces the first radiator wall 5 and the second film side 21b faces the convector wall 13.

According to some embodiments the electrical heating arrangement 20 comprises one or more protective membranes 6 arranged between the resistive film 21 and the first radiator wall 5 and/or between the resistive film 21 and the convector wall 13. Such protective membranes 6 can at least partly encapsulate the resistive film 21 in order to protect it from wear and blows. The protective membranes 6 can for example be made of silicone, rubber, plastics, polymers or any other material which allows heat from the electrical heating arrangement 20 to be transferred to the first radiator wall and/or the convector wall 13.

As illustrated in Fig. 1, the elongated radiator 3 is arranged to be attached to the elongated convector 11 such that the first radiator wall 5 faces the convector wall 13, and the first radiator wall 5 can be shaped complementary to the convector wall 13. The electrical heating arrangement 20 is interposed between the first radiator wall 5 and the convector wall 13.

When warm fluid is led trough the fluid channels 9, heat from the liquid will be distributed to the material that forms the radiator 3. Thus, the radiator 3 will be heated. When the radiator 3 has a higher temperature than its surrounding, heat will be transferred to its surrounding. Some of the heat will be distributed to the second radiator wall 7. The second radiator wall 7 will then heat its surrounding by radiation. Some of the heat from the radiator 3 will be distributed to the convector 11. A large portion of the heat will be dissipated to the surrounding air via the convector flanges 15.

When the electrical heating arrangement 20 is activated, heat from the electrical heating arrangement 20 will be distributed to the material that forms the radiator 3. Thus, the radiator 3 will be heated. When the radiator 3 has a higher temperature than its surrounding, heat will be transferred to its surrounding. Some of the heat will be distributed to the first radiator wall 5, the fluid channels 9, any fluid within the fluid channels 9 and the second radiator wall 7. The second radiator wall 7 will then heat up its surrounding by radiation. Some of the heat from the electrical heating arrangement 20 will be distributed to the convector 11. A portion of the heat will be dissipated to the surrounding air via the convector flanges 15.

The heated fluid within the fluid channels 9 and the electrical heating arrangement 20 can heat the heating system 1 independently of each other.

In **Fig. 2** the heating arrangement 1 is illustrated from a short side, i.e. as seen along the longitudinal direction L in Fig. 1.

The radiator 3 is attached to the convector 11 such that the first radiator wall 5 faces the convector wall 13. The first radiator wall 5 is shaped complementary to the convector wall 13 and the heating arrangement 20 is arranged between the first radiator wall 5 and the convector wall 13. In the embodiment illustrated in Fig. 2 both the first radiator wall 5 and the convector wall are 13 substantially flat. When the electrical heating arrangement 20 is activated, heat from the electrical heating arrangement 20 will be distributed to the material that forms the radiator 3 such that the radiator 3 will be heated. When the radiator 3 has a higher temperature than its surrounding, heat will be transferred to its surrounding. Some of the heat will be distributed to the second radiator wall 7. The second radiator wall 7 will then heat up its surrounding by radiation. Some of the heat from the electrical heating arrangement 20 will be distributed to the convector 11. A portion of the heat will be dissipated to the surrounding air via the convector flanges 15.

The radiator 3 and the convector 11 are pressed to each other and to the electrical heating arrangement 20 and fixed relatively each other via projections **2.** In other embodiments the radiator 3 and the convector 11 are attached to each other and/or the electrical heating arrangement 20 via other types of mechanical locking, attachment arrangements, such as: glue, welding, soldering or similar.

The heating system 1 in the embodiment illustrated in Fig. 2 comprises at least one bracket **30,** which comprises first attachment means **32** for attaching the bracket to a wall. Such first attachment means 32 can for example comprise one or more through-holes, arranged to receive a screw, bolt or similar. Such first attachment means 32 can also/alternatively comprise one or more hooks, projecting members, threaded members, bayonet couplings, male/female attachment organs, snap-connections or similar. Hereby the bracket 30 can be securely mounted to e.g. a side wall of a vehicle passenger compartment.

The at least one bracket 30 further comprises second attachment means **34** for attaching at least one of the elongated radiator 3 and the elongated convector 11 to the bracket 30. In the embodiment illustrated in Fig. 2 the second attachment means 34 comprises grooves **34a** into which upper and lower end flanges **4** of the radiator 3 can be snapped. The second attachment means 34 can also/alternatively comprise one or more hooks, projecting members, threaded members, bayonet couplings, male/female attachment organs, glue or similar. In some embodiments the second attachment means 34 are arranged to be attached to the convector 11.

The radiator 3 and/or the convector 11 can be formed from an extruded metal or metal alloy. The radiator 3 and/or the convector 11 can for example be formed from aluminium, aluminium-alloy or any other type of metal. In some embodiments the radiator 3, the convector 11 and/or any constructional details thereof can be made of polymers and/or plastic materials, such as durable polymers and/or plastic materials with excellent heat exchanging properties. Hereby heat from the fluid channels 9 can be transferred, at least partly, by the polymers/plastic materials.

In some embodiments the first radiator wall 5, the second radiator wall 7 and the at least one fluid channel 9 are integrally formed from an extruded metal or metal alloy.

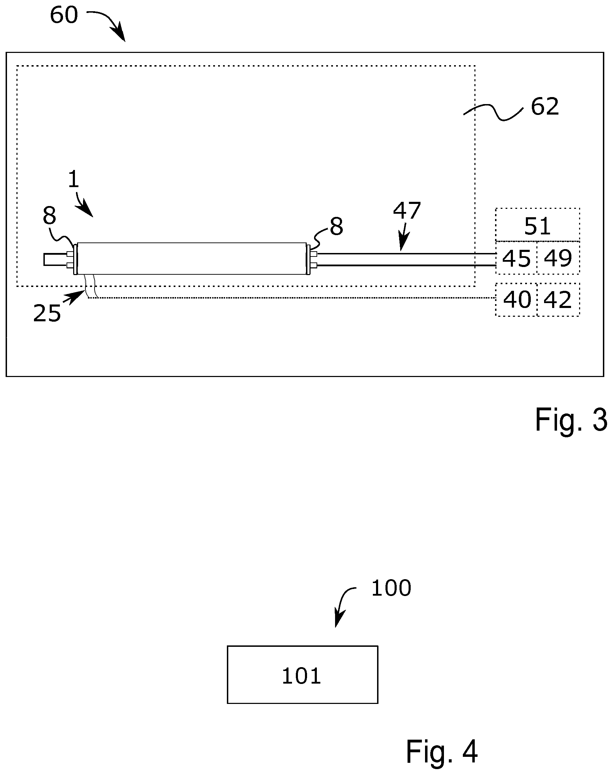

**Fig. 3** illustrates a vehicle **60.** The vehicle 60 can e.g. be a bus, a train, a tram, a multipurpose vehicle, a van, a car, a construction equipment vehicle, a mining operation vehicle, a vessel or any other type of vehicle with a passenger or driver compartment **62.**

The schematically illustrated vehicle 60 in Fig. 3 comprises a heating system 1 according to embodiments described herein. The heating system 1 can, e.g. as shown here, be mounted on a side wall of the passenger compartment 62 of the vehicle 60.

The heating system 1 according to the embodiment illustrated in Fig. 3 comprises a pump **45** and at least one conduit **47.** The at least one conduit 47 operatively connects the at least one fluid channel with at least one of a cooling system **49** of a vehicle internal combustion engine and an external fluid heater **51.** Fluid can be heated by the cooling system 49 and/or the external fluid heater 51. Optionally the external fluid heater 51 can be arranged outside of the vehicle 60, such as at a bus terminal, bus garage, bus depot or similar.

The fluid, which is heated by the cooling system 49 and/or the external fluid heater 51, can for example be heated to 50-90 degrees Celsius. In some applications other temperatures are possible. A heating effect of the heating system 1 can e.g. be between 500-3000 Watts for every length-meter of the radiator 3. The heating system 1 can optionally also comprise a number of sensors and control means, which can be used to activate and operate the heating system 1 in accordance with manual input, such as e.g. temperature ranges, pre-set cycles or similar.

The pump 45 can be controllable to circulate a fluid within the at least one conduit 47 and the at least one fluid channel such that fluid will be heated by the cooling system 49 and/or the external fluid heater 51 and fed through the radiators 3. In the one or more radiators 3 heat from the heated fluid will be dissipated into the passenger compartment.

As illustrated in Fig. 3 the heating system 1 comprises electrical leads 25 which are arranged to selectively supply the electrical heating arrangement 20 from an electrical power source **40.**

The electrical power source 40 can be at least one of; an electrical grid, a battery, a generator and an alternator. The electrical power source can supply the electrical heating arrangement 20 with electricity both when the vehicle 60 is turned on and when the vehicle 60 is shut off.

The heating system 1 can also comprise control means **42** for controlling at least one of an electrical effect and an electrical voltage supplied to the electrical heating arrangement 20. Such control means 42 can be e.g. any control means which are arranged for other controlling or regulating functions e.g. for electrically driven buses or other electrically driven vehicles. Such control means 42 can for example control if the electrical heating arrangements 20 should be activated during pre-defined cycles during the day, based on a temperature within a passenger compartment and or an ambient temperature or similar.

The heating system 1 can also comprise one or more end-caps **8.** Such end-caps 8 can connect one fluid channel 9 to another fluid channel 9 by forming a U-channel at the end of the radiator 3. Such end-caps 8 can also be used to connect the fluid channels 9 to conduits, as illustrated in Fig. 3. Such end-caps 8 can also be used to connect two or more heating systems 1 with each other, such that heated fluid can be fed through a plurality of interconnected heating systems 1. Each heating system 1 can be referred to as a separate module, and the numbers of modules can e.g. be adapted to the size of a vehicle passenger compartment into which the modules are to be mounted. The heated fluid can be configured to flow with a counter-current flow or with a parallel flow within the fluid channels 9.

The heating system according to the embodiments herein can also be arranged to have a cooling capacity; it can then be referred to as a climate system or a vehicle climate system. Liquid can be cooled e.g. in a vehicle cooler, HVAC-system or the like. Relatively cold liquid can then be pumped through the conduits and fluid channels as described herein. The radiator and convector will then be cooled by the fluid. When a temperature of the radiator and convector is lower than its surrounding they will decrease e.g. a passenger compartment temperature.

In some embodiments the heating system according to embodiments described herein comprises sodium sulfate or Glauber's salt (Na₂SO₄/ Na₂SO₄·10H₂O). Such sodium sulfate or Glauber's salt is used as a heat battery, and may heat e.g. the radiator 3 and/or the convector 11 by a chemical process or reaction.
**Fig. 4** illustrates a method **100** for heating a vehicle passenger compartment by means of a heating system which comprises: An elongated radiator having a first radiator wall, a second radiator wall and at least one fluid channel for receiving a heated fluid interposed between the first radiator wall and the second radiator wall. An elongated convector comprising a convector wall and a plurality of convector flanges which protrude outwardly from the convector wall. An electrical heating arrangement which is interposed between the first radiator wall and the convector wall and control means for controlling supply of electrical power to the electrical heating arrangement.

The method 100 comprises: Controlling **101,** by the control means, the electrical heating arrangement to be heated.

As used herein, the term "comprising" or "comprises" is open-ended, and includes one or more stated features, elements, steps, components or functions but does not preclude the presence or addition of one or more other features, elements, steps, components, functions or groups thereof.

## Claims

1. A heating system (1) for vehicles, the heating system (1) comprising;
- an elongated radiator (3) having a first radiator wall (5), a second radiator wall (7) and at least one fluid channel (9) for receiving a heated fluid interposed between the first radiator (5) wall and the second radiator wall (7),
- an elongated convector (11) comprising a convector wall (13) and a plurality of convector flanges (15) which protrude out from the convector wall (13),
the heating system (1) further comprising an electrical heating arrangement (20) **characterized in that** said electrical heating arrangement is interposed between the first radiator wall (5) and the convector wall (13), wherein the electrical heating arrangement (20) is arranged as a resistive film (21) with a first film side (21a) and a second film side (21b), the first film side (21a) facing the first radiator wall (5) and the second film side (21b) facing the convector wall (13), and wherein the electrical heating arrangement (20) comprises one or more protective membranes (6) arranged between the resistive film (21) and the first radiator wall (5) and/or between the resistive film (21) and the convector wall (13).

2. The heating system (1) according to claim 1, **wherein** the resistive film (21) covers at least 80% of at least one of the first radiator wall (5) and the convector wall (13).

3. The heating system (1) according to any one of the preceding claims, **wherein** the elongated radiator (3) is attached to the elongated convector (11) such that the first radiator wall (5) faces the convector wall (13).

4. The heating system (1) according to any one of the preceding claims, **wherein** the elongated radiator (3) and the elongated convector (11) are formed from an extruded metal or metal alloy.

5. The heating system (1) according to any one of the preceding claims **wherein** the first radiator wall (5), the second radiator wall (7) and the at least one fluid channel (9) are integrally formed from an extruded metal or metal alloy.

6. The heating system (1) according to any one of the preceding claims **wherein** the heating system (1) further comprises at least one bracket (30), said at least one bracket (30) comprising
- first attachment means (32) for attaching the bracket to a wall, and
- second attachment means (34) for attaching at least one of the elongated radiator (3) and the elongated convector (11).

7. The heating system (1) according to any one of the preceding claims **wherein** the heating system (1) comprises a pump (45) and at least one conduit (47) which is connected to the at least one fluid channel (9) and to at least one of a cooling system (49) of a vehicle internal combustion engine and an external fluid heater (51), said pump (45) being controllable to circulate a fluid within the at least one conduit (47) and the at least one fluid channel (9).

8. The heating system (1) according to any one of the preceding claims **wherein** the heating system (1) comprises electrical leads (25), arranged to selectively supply the electrical heating arrangement (1) from an electrical power source (40), the electrical power source (40) being at least one of; an electrical grid, a battery, a generator and an alternator.

9. The heating system (1) according to any one of the preceding claims **wherein** the heating system (1) comprises control means (42) for controlling at least one of an electrical effect and an electrical voltage supplied to the electrical heating arrangement (20).

10. A vehicle (60), **characterized in that** the vehicle (60) has a passenger compartment (62) which comprises one or more heating systems (1) according to any one of claims 1-9.

## Patentansprüche

1. Heizsystem (1) für Fahrzeuge, wobei das Heizsystem (1) Folgendes umfasst:
- einen länglichen Heizkörper (3) mit einer ersten Heizkörperwand (5), einer zweiten Heizkörperwand (7) und mindestens einen Fluidkanal (9) zur Aufnahme eines erhitzten Fluids, das zwischen der ersten Heizkörperwand (5) und der zweiten Heizkörperwand (7) angeordnet ist,
- einen länglichen Konvektor (11) umfassend eine Konvektorwand (13) und eine Mehrzahl von Konvektorflanschen (15), die von der Konvektorwand (13) vorstehen,
wobei das Heizsystem (1) weiter eine elektrische Heizanordnung (20) umfasst, **dadurch gekennzeichnet, dass** die elektrische Heizanordnung zwischen der ersten Heizkörperwand (5) und der Konvektorwand (13) angeordnet ist, wobei die elektrische Heizanordnung (20) als eine Widerstandsfolie (21) mit einer ersten Folienseite (21a) und einer zweiten Folienseite (21b) angeordnet ist, wobei die erste Folienseite (21a) der ersten Heizkörperwand (5) zugewandt ist, und die zweite Folienseite (21b) der Konvektorwand (13) zugewandt ist, und
wobei die elektrische Heizanordnung (20) eine oder mehrere Schutzmembranen (6) umfasst, die zwischen der Widerstandsfolie (21) und der ersten Heizkörperwand (5) und/oder zwischen der Widerstandsfolie (21) und der Konvektorwand (13) angeordnet sind.

2. Heizsystem (1) nach Anspruch 1, wobei die Widerstandsfolie (21) mindestens 80% mindestens einer der ersten Heizkörperwand (5) und der Konvektorwand (13) abdeckt.

3. Heizsystem (1) nach einem der vorgehenden Ansprüche, wobei der längliche Heizkörper (3) am länglichen Konvektor (11) befestigt ist, so dass die erste Heizkörperwand (5) der Konvektorwand (13) zugewandt ist.

4. Heizsystem (1) nach einem der vorgehenden Ansprüche, wobei der längliche Heizkörper (3) und der längliche Konvektor (11) aus einem extrudierten Metall oder einer Metalllegierung gebildet sind.

5. Heizsystem (1) nach einem der vorgehenden Ansprüche, wobei die erste Heizkörperwand (5), die zweite Heizkörperwand (7) und der mindestens eine Fluidkanal (9) aus einem extrudierten Metall oder einer Metalllegierung einstückig ausgebildet sind.

6. Heizsystem (1) nach einem der vorgehenden Ansprüche, wobei das Heizsystem (1) ferner mindestens eine Klammer (30) umfasst, wobei die mindestens eine Klammer (30) Folgendes umfasst
- erste Befestigungsmittel (32) zur Befestigung der Klammer an einer Wand, und
- zweite Befestigungsmittel (34) zur Befestigung mindestens eines des länglichen Heizkörpers (3) und des länglichen Konvektors (11).

7. Heizsystem (1) nach einem der vorgehenden Ansprüche, wobei das Heizsystem (1) eine Pumpe (45) und mindestens eine Rohrleitung (47) umfasst, die mit dem mindestens einen Fluidkanal (9) und mit mindestens einem von einem Kühlsystem (49) eines Fahrzeugverbrennungsmotors und einem externen Fluiderhitzer (51) verbunden ist, wobei die Pumpe (45) zum Zirkulieren eines Fluids innerhalb der mindestens einen Rohrleitung (47) und des mindestens einen Fluidkanals (9) gesteuert werden kann.

8. Heizsystem (1) nach einem der vorgehenden Ansprüche, wobei das Heizsystem (1) elektrische Leitungen (25) umfasst, die dafür eingerichtet sind, die elektrische Heizanordnung (1) von einer elektrischen Stromquelle (40) selektiv zu versorgen, wobei die elektrische Stromquelle (40) mindestens eines von den folgenden ist; ein elektrisches Netz, eine Batterie, ein Generator und ein Drehstromgenerator.

9. Heizsystem (1) nach einem der vorgehenden Ansprüche, wobei das Heizsystem (1) Steuermittel (42) zur Steuerung mindestens einer von einer elektrischen Wirkung und einer elektrischen Spannung, die der elektrischen Heizanordnung (20) zugeführt wird.

10. Fahrzeug (60), **dadurch gekennzeichnet, dass** das Fahrzeug (60) einen Fahrgastraum (62) aufweist, der ein oder mehrere Heizsysteme (1) nach einem der Ansprüche 1-9 umfasst.

## Revendications

1. Système de chauffage (1) pour véhicules, le système de chauffage (1) comprenant ;
- un radiateur allongé (3) ayant une première paroi de radiateur (5), une deuxième paroi de radiateur (7) et au moins un canal de fluide (9) destiné à recevoir un fluide chauffé interposé entre la première paroi de radiateur (5) et la deuxième paroi de radiateur (7),
- un convecteur allongé (11) comprenant une paroi de convecteur (13) et une pluralité de brides de convecteur (15) qui font saillie hors de la paroi de convecteur (13),
le système de chauffage (1) comprenant en outre un dispositif de chauffage électrique (20)
**caractérisé en ce que** ledit dispositif de chauffage électrique est interposé entre la première paroi de radiateur (5) et la paroi de convecteur (13),
dans lequel le dispositif de chauffage électrique (20) est agencé sous forme de film résistif (21) ayant un premier coté de film (21a) et un deuxième côté de film (21b), le premier coté de film (21a) faisant face à la première paroi de radiateur (5) et le deuxième côté de film (21b) faisant face à la paroi de convecteur (13), et
dans lequel le dispositif de chauffage électrique (20) comprend un ou plusieurs membranes protecteurs (6) agencés entre le film résistif (21) et la première paroi de radiateur (5) et/ou entre le film résistif (21) et la paroi de convecteur (13).

2. Système de chauffage (1) selon la revendication 1, dans lequel le film résistif (21) couvre au moins 80 % d'au moins l'un parmi la première paroi de radiateur (5) et la paroi de convecteur (13).

3. Système de chauffage (1) selon l'une quelconque des revendications précédentes, dans lequel le radiateur allongé (3) est fixé au convecteur allongé (11) si bien que la première paroi de radiateur (5) fait face à la paroi de convecteur (13).

4. Système de chauffage (1) selon l'une quelconque des revendications précédentes, dans lequel le radiateur allongé (3) et le convecteur allongé (11) sont formés à partir d'un métal ou d'un alliage métallique extrudé.

5. Système de chauffage (1) selon l'une quelconque des revendications précédentes, dans lequel la première paroi de radiateur (5), la deuxième paroi de radiateur (7) et l'au moins un canal de fluide (9) sont intégralement formés à partir d'un métal ou d'un alliage métallique extrudé.

6. Système de chauffage (1) selon l'une quelconque des revendications précédentes, dans lequel le système de chauffage (1) comprend en outre au moins un support (30), ledit au moins un support (30) comprenant
□ des premiers moyens de fixation (32) pour fixer le support à un mur, et
□ des deuxièmes moyens de fixation (34) pour fixer au moins l'un parmi le radiateur allongé (3) et le convecteur allongé (11).

7. Système de chauffage (1) selon l'une quelconque des revendications précédentes, dans lequel le système de chauffage (1) comprend une pompe (45) et au moins un conduit (47) qui est raccordé à l'au moins un canal de fluide (9) et à au moins l'un d'un système de refroidissement (49) d'un moteur à combustion interne de véhicule et d'un réchauffeur de fluide externe (51), ladite pompe (45) pouvant être commandée pour faire circuler un fluide dans l'au moins un conduit (47) et l'au moins un canal de fluide (9).

8. Système de chauffage (1) selon l'une quelconque des revendications précédentes, dans lequel le système de chauffage (1) comprend des fils électriques (25) agencés pour fournir sélectivement le dispositif de chauffage électrique (1) à partir d'une source d'énergie électrique (40), la source d'alimentation électrique (40) étant au moins un parmi; une grille électrique, une batterie, un générateur et un alternateur.

9. Système de chauffage (1) selon l'une quelconque des revendications précédentes, dans lequel le système de chauffage (1) comprend des moyens de commande (42) pour commande au moins un parmi un effet électrique et une tension électrique fournis au dispositif de chauffage électrique (20).

10. Véhicule (60), **caractérisé en ce que** le véhicule (60) comporte un habitacle (62) qui comprend un ou plusieurs systèmes de chauffage (1) selon l'une quelconque des revendications 1 à 9.
